**Europäisches Patentamt**

**European Patent Office**

**Office européen des brevets**

(11) Veröffentlichungsnummer: **0 062 169**
**A2**

## EUROPÄISCHE PATENTANMELDUNG

(21) Anmeldenummer: **82101820.7**

(22) Anmeldetag: **08.03.82**

(51) Int. Cl.³: **C 03 B 9/40**

(30) Priorität: **02.04.81 DE 3113267**

(43) Veröffentlichungstag der Anmeldung: **13.10.82**
**Patentblatt 82/41**

(84) Benannte Vertragsstaaten: **AT BE CH FR GB IT LI NL SE**

(71) Anmelder: **VEBA-GLAS Aktiengesellschaft,**
**Ruhrglasstrasse 50, D-4300 Essen 12 (DE)**

(72) Erfinder: **Knoth, Werner-Dieter, Byfangerstrasse 175,**
**D-4300 Essen 15 (DE)**
Erfinder: **Hüllen, Helmut, Dreilindenstrasse 93,**
**D-4300 Essen 1 (DE)**
Erfinder: **Kopatz, Klaus, Wrangelstrasse 30 a,**
**D-4250 Bottrop (DE)**

(74) Vertreter: **Spalthoff, Adolf, Dipl.-Ing.,**
**Pelmanstrasse 31 P.O. Box 34 02 20,**
**D-4300 Essen 1 (DE)**

(54) IS-Verarbeitungsmaschine zur Herstellung von Hohlglasartikeln.

(57) IS-Verarbeitungsmaschinen zur Herstellung von Hohlglasartikeln sind mit Vorformen und diesen zugeordneten Fertigformen ausgerüstet. Es ist bekannt, die bewegten Teile dieser IS-Maschinen mit Preßluft zu beaufschlagen. Um die durch die Preßluftbeaufschlagung gegebenen Nachteile zu vermeiden wird erfindungsgemäß vorgeschlagen, die bewegten Teile der Maschine mit hydraulischen Antrieben zu versehen. Dies gilt für sämtliche Teile einer IS-Maschine, insbesondere für die Verteilung der von einem flüssigen Glasstrang abgeschnittenen Abschnitte (Tropfen), für die Vorrichtung zum Heben und Senken sowie Verschwenken eines oder mehrerer Tropfringe, für die Vorrichtung zum Heben und Senken sowie zum Verschwenken einer oder mehrerer Böden, für die Vorrichtung zum Schließen und Öffnen der Formen, für die Vorrichtung zum Umsetzen eines oder mehrerer Vorformlinge, die Vorrichtung zum Heben und Senken sowie Verschwenken eines oder mehrerer Blasköpfe, für die Vorrichtung zum Umsetzen eines oder mehrerer Hohlglasartikel aus den Fertigformen auf eine Transportvorrichtung sowie für eine Vorrichtung zum Verschieben von den hergestellten Artikeln auf eine Abstellplatte od.dgl.

—Λ—

**"IS-Verarbeitungsmaschine zur Herstellung von Hohlglasartikeln"**

Die Erfindung betrifft eine IS-Verarbeitungsmaschine zur Herstellung von Hohlglasartikeln, welche mit Vorformen und diesen zugeordneten Fertigformen ausgerüstet ist. Das wesentliche Merkmal dieser IS-Verarbeitungsmaschinen besteht darin, daß in jeder Fertigungsstation, gleichzeitig aber zeitlich versetzt, der gleiche Produktionsprozeß abläuft. Der Ablauf des Herstellungsprozesses für Hohlglasartikel erfolgt in der Weise, daß flüssige Glastropfen jeweils in eine metallische Vorform der einzelnen Stationen zu einem Vorformling, dem sog. Külbel, verpreßt oder ausgeblasen werden. Nach Übergabe der jeweiligen Vorformlinge in den einzelnen Vorformen zugeordnete Fertigformen werden die Vorformlinge in diesen durch weiteres Ausblasen oder Evakuieren ihrer äußeren Umgebung zu den fertigen Artikeln umgeformt. Dabei sind im Vorformkomplex üblicherweise eine, zwei oder drei Formen aneinandergebündelt als sog. Ein-, Zwei- oder Dreifachformen. Eine gleiche Bündelung findet sich dann im Fertigformkomplex jeweils einer Fertigungsstation einer IS-Verarbeitungsmaschine. Die anderen Stationen dieser Maschine sind analog aufgebaut. Die einzelnen Produktionsstationen sind linear angeordnet.

Es ist bekannt, die für den Produktionsablauf zu bewegenden Maschinenteile mit Preßluft anzutreiben. Die Begründung liegt in ihrer Verfügbarkeit, Unbrennbarkeit, leichten Hantierbarkeit, Fortleitungsfähigkeit sowie Steuerbarkeit. Der Nachteil der Verwendung von Druckluft als Antriebsmittel für die Beaufschlagung der Antriebe der einzelnen Maschinenteile einer IS-Maschine besteht jedoch darin, daß z.B. glühendes Glas zu einer örtlichen Entflammung brennbarer Teile derartiger Maschinen geführt hat. In derartigen Fällen hat sich gezeigt, daß die druckluftführenden Zuleitungen, die aus Gründen der Flexibilität aus gummibeschichtetem Gewebe oder aus Kunststoff bestehen, nach kurzer Zeit zusammenschmelzen und zur Entzündung kommen. Der Überdruck der Druckluft in diesen Leitungen führt dann zu einem weiteren Aufplatzen und Aufreißen der Schläuche, zu verstärktem Austritt der Druckluft und damit der eigentlichen Aktivierung eines Maschinenbrandes. Mit anderen Worten facht die austretende Druckluft einen sich bildenden Brand erst richtig an. Ein weiterer Nachteil der Verwendung von Druckluft als Mittel zur Übertragung von Steuerimpulsen und
Durchführung von Regelstellungen macht sich bei steigender Impulshäufigkeit und -geschwindigkeit stark bemerkbar. Der Grund dafür ist die Kompressibilität der
Luft. Diese führt zu einer Verzögerung zwischen dem Anstoß eines Luftimpulses und der eigentlich gewollten
Effektauslösung. Die Verzögerungen zwischen Impulsanstieg, Impulsdauer und Abklingen des Impulses bei einer
Übertragung auf einer Leitung lassen zwischen dem Leitungsanfang und dem Leitungsende im extremen Fall die
gewollte Impulsdauer am Ende der Übertragungsstrecke
überhaupt nicht mehr erkennen. Ein weiterer Nachteil besteht darin, daß Zwischenstellungen zwischen den beiden
Endstellungen eines Maschinenelementes nicht exakt ansteuerbar sind. Ein Nachteil in wirtschaftlicher Hinsicht
besteht darin, daß die Luft nach Ausführung ihrer Funktion entspannt wird, in die freie Atmosphäre entweicht
und somit dem Prozeß verlorengeht. Der Aufwand, der zur
Reinigung, Trocknung oder sonstigen Aufbereitung der Luft
einschließlich ihrer Kompression erbracht werden muß, ist
damit dem Prozeß verlorengegangen. Die Kompressibilität
der Luft bringt es weiter mit sich, daß besonders bei großen
bewegten Massen mit ihren Trägheiten der Aufbau des Druckes
und die Ingangsetzung der Umformung in mechanische Bewegung
mit einem höheren Zeitaufwand verbunden ist. Im ungünstigen Falle von Resonanzen zwischen dem Antriebsmittel Druckluft und den zu bewegenden Maschinenteilen können Schwingungen der sich bewegenden Teile auftreten. Um diese zu
vermeiden ist es bekanntgeworden, Dämpfungsglieder verschiedener Ausführungen zu verwenden. Diese bringen aber
den Nachteil einer Begrenzung der Beschleunigung mit sich
sowie die Unmöglichkeit, höhere Fertigungsgeschwindigkeiten zu erzielen.

Von diesem Stand der Technik ausgehend liegt der Erfindung
die Aufgabe zugrunde, unter Vermeidung vorerwähnter Nachteile eine IS-Verarbeitungsmaschine der eingangs genannten Art
dahingehend zu verbessern, daß diese in einfacher Weise sowohl in ihrer Betriebssicherheit als auch in bezug auf ihre
Produktionsgeschwindigkeit durch erhebliche Steigerung der
Geschwindigkeit und Genauigkeit der Bewegungsabläufe der einzelnen Maschinenteile erhöht wird.

Gemäß der Erfindung wird dies dadurch erreicht, daß die
bewegten Teile der Maschine mit hydraulischen Antrieben
versehen sind. Auf diese Weise ergibt sich eine außerordentlich hohe Präzision im Bewegungsablauf, hohe Beschleunigungen im Anlauf und kurze Bremswege beim Anhalten der bewegten Teile. Eine Dämpfung mit einer Vernichtung von Energie ist

nicht mehr erforderlich, woraus sich die Möglichkeit weiterer, auch energiesparender Geschwindigkeitssteigerungen bei den Bewegungsabläufen ergibt. Außerdem ist die Brandgefahr praktisch ausgeschlossen, da keine Preßluft mehr ausströmen kann, die eine lokalbegrenzte Entfalmmung erst richtig zu einem Brand entfachen kann.

Vorteilhaft finden als hydraulische Antriebe Axial-Kolben-Einheiten und/oder Drehkolben od.dgl. Verwendung. Die Bewegungen der hydraulischen Antriebe werden über Zahnstangen, Spindeln usw. unmittelbar oder unter Zwischenschaltung eines Getriebes auf die zu bewegenden Teile der Vorrichtung übertragen. Der Druckbereich des hydraulischen Mittels liegt vorteilhaft zwischen 0,02 und 200 bar. Zur Konstanthaltung der Viskosität des hydraulischen Mittels die in die Präzision und Toleranz aller Bewegungsabläufe unmittelbar eingreift, kann oder können Kompensatoren eingesetzt werden. Im Falle einer Wärmeabhänggkeit der Viskosität besteht dieser Kompensator z.B. aus einem Wärmeaustauscher, der das Antriebsmittels auf einer konstanten Temperatur hält.

Gemäß einem weiteren Merkmal der Erfindung findet bei solchen Maschinenteilen, die den hohen Temperaturen bei der Glasverarbeitung unmittelbar ausgesetzt sind, ein schwer entflammbares oder unbrennbares hydraulisches Mittel Verwendung. Für den Fall etwaiger Leckagen ist somit eine maximale Brandsicherheit gegeben.

Die Hydraulikkreise der einzelnen Produktionsstationen einer IS-Maschine können in mehrere Teilkreise unterteilt werden, z.B. je ein Kreis für eine Station einer derartigen Maschine. In diesem Falle hat jede einzelne Station eine eigene Antriebs- und Steuereinheit. Damit ergibt sich im Falle etwaiger Störungen mit der Folge eines Stillstandes eine Unabhängigkeit von der Arbeitsweise der Nachbarstationen.

Die Steuerung des hydraulischen Druckmittels erfolgt durch mechanisch und/oder hydraulisch und/oder elektrisch betätigte Ventile. Alle hydraulischen Antriebe sind von einem Rechner und Prozessor gesteuert. Das hydraulische Treibmittel wird mittels einer Pumpe unter Druck gehalten. Die Steuerung erfolgt durch die den einzelnen Antrieben zugeordneten Ventile.

Gegenstand der Erfindung ist weiterhin eine Vorrichtung zur Verteilung der von einem flüssigen Glasstrang abgeschnittenen Abschnitte (Tropfen), in die Rinnen einer Verarbeitungsmaschine zur Herstellung von Hohlglasartikeln. Die Aufgabe eines derartigen Verteilers besteht darin, die von einem kontinuierlich austretenden flüssigen Glasstrang abgetrennten Abschnitte (Tropfen) den einzelnen Rinnen
der Stationen einer IS-Verarbeitungsmaschine zuzuführen. Der Tropfenverteiler führt dabei Schwenkbewegungen aus, die schnell und mit hoher Präzision
ausgeführt sein müssen, um bei vergleichsweise hohen
Produktionsgeschwindigkeiten die Glastropfen mit
ausreichender Genauigkeit in die Zuleitungsrinnen
der Produktionsstationen der Maschine abgeben zu
können. Es ist bekannt, den Bewegungsablauf eines
derartigen Verteilers durch einen pneumatischen
Antrieb zu bewirken. Die Verwendung von Druckluft
als Antriebsmedium hat jedoch die eingangs erwähnten schwerwiegenden Nachteile.

Um diese zu vermeiden, wird erfindungsgemäß vorgeschlagen, daß
als Antrieb für den Verteiler ein hydraulischer Drehkolben vorgesehen ist. Es hat sich gezeigt, daß auf diese Weise alle
Nachteile des pneumatischen Antriebes beseitigt werden konnten. Durch die Inkompressibilität der Hydraulikflüssigkeit
folgt der Verteiler der IS-Maschine ohne Verzögerung dem
Schaltimpuls, wobei durch Verriegeln des Steuerventils jede gewünschte Zwischenstellung erreichbar ist.

Vorteilhaft ist der Drehkolben durch ein Umschaltventil
od.dgl. betätigt, welches von einem Rechner und Prozessor
gesteuert ist, womit die zeitliche, beliebig häufige und
mit beliebiger Geschwindigkeit ablaufende Wahl der Bewegungen des Verteilers möglich ist.

Gegenstand der Erfindung ist weiterhin eine Vorrichtung zum
Heben und Senken sowie Verschwenken eines oder mehrerer Tropfringe zu bzw. von der bzw. den Eintrittsöffnungen einer oder
mehrerer Vorformen einer Verarbeitungsmaschine zur Herstellung
von Hohlglasartikeln, wobei der bzw. die Tropfringe an einem
vorragenden Arm angebracht sind, der an einer Achse befestigt
ist, die mit einem Antrieb gekoppelt ist.

Die Aufgabe der Tropfringe besteht darin, die von oben frei
fallenden Glastropfen in die Vorformen einer IS-Maschine genauestens einzuführen. Alle weiteren Verarbeitungsstufen innerhalb der Vorform hängen weitgehend vom richtigen Einfallen der Tropfen in die Vorformen ab. Der Tropfring führt folgende Bewegungen aus, nämlich Anheben aus der Ruhelage, seitliches Verschwenken, Absenken mit Andrücken an die Vorform, Anheben, seitliches Rückschwenken und Absenken in die Ruhelage.

Es ist bekannt, diese Bewegungsabläufe der Tropfringe mit druckluftbeaufschlagten Antrieben auszuführen. Durch die Kompressibilität der Druckluft ergeben sich jedoch die eingangs bereits beschriebenen, schwerwiegenden Nachteile.

Um diese zu vermeiden wird erfindungsgemäß vorgeschlagen, als Antriebe für das Heben und Senken des bzw. der Tropfringe eine hydraulische Axial-Kolben-Einheit und für das Verschwenken einen hydraulischen Drehkolben vorzusehen. Durch die Verwendung hydraulisch beaufschlagter Antriebe wird die Inkompressibilität einer Hydraulikflüssigkeit ausgenutzt, mit der Folge einer genau steuerbaren und mit hoher Geschwindigkeit ablaufenden Bewegung der Tropfringe.

Vorteilhaft sind die Axial-Kolben-Einheit und der Drehkolben miteinander gekoppelt, so daß sich eine kompakte Baueinheit ergibt. Die hydraulischen Antriebe sind durch Umschaltventile od.dgl. betätigt, welche von einem Rechner und Prozessor gesteuert sind, denen die für einen optimaligen Arbeitsablauf erforderlichen Daten vorgegeben werden.

- 10 -

Die Erfindung bezieht sich weiterhin auf eine Vorrichtung
zum Heben und Senken sowie zum Verschwenken einer oder
mehrerer Böden zu bzw. von der bzw. den Bodenöffnungen einer
oder mehrerer Vorformen einer IS-Verarbeitungsmaschine zur
Herstellung von Hohlglasartikeln, wobei der bzw. die Böden an einem vorragenden Arm angebracht sind, der an einer
Achse befestigt ist, die mit einem Antrieb gekuppelt ist.

Der Vorformboden bildet den Abschluß der Vorform in ihrem
oberen Teil in der Phase, in der die Verformung des Tropfens
vorgenommen werden soll. Der Vorformboden wird aufgebracht,
nachdem der Tropfen in die Vorform gefallen ist, in welcher
der Tropfen von unten innerhalb der Vorform durch Pressen
oder Blasen zum Vorformling, dem sog. Külbel, ausgeformt
wird, welches das Vorprodukt des späteren Glasartikels darstellt. Der Boden führt die analogen Bewegungsschritte aus,
wie sie bereits vorstehend beim Tropfring beschrieben wurden.
Allerdings laufen diese Bewegungen erst ab, nachdem der Tropfring die Vorform verlassen und Platz freigemacht hat für das
Aufsetzen des Bodens.

Es ist bekannt, als Antriebsmedium für den Bewegungsablauf
des Bodens bzw. der Böden Preßluft zu verwenden, welche jedoch infolge ihrer Kompressibilität die eingangs im einzelnen
beschriebenen Nachteile mit sich bringt.

Um diese zu vermeiden wird erfindungsgemäß vorgeschlagen, das als Antriebe für das Heben und Senken des bzw. der Böden eine hydraulische Axial-Kolben-Einheit und für das Verschwenken ein hydraulischer Drehkolben vorgesehen sind. Auf diese Weise ergeben sich außerordentlich genaue und mit hoher Geschwindigkeit erfolgende Bewegungsabläufe des Bodens bzw. der Böden.

Vorteilhaft sind die Axial-Kolben-Einheit und der Drehkolben miteinander gekoppelt, was zu einer kompakten Bauweise führt. Die hydraulischen Antriebe sind durch Umschaltventile od.dgl. betätigt, welche von einem Rechner und Prozessor gesteuert sind, denen die für einen optimalen Arbeitsablauf erforderlichen Daten vorgegeben sind.

Gegenstand der Erfindung ist weiterhin eine Vorrichtung zum Öffnen und Schließen der Formen einer Verarbeitungsmaschine zur Herstellung von Hohlglasartikeln, wobei die Formenhälftenpaare mit ihren Gelenken an der Verarbeitungsmaschine festgelegt sind.

Eine derartige Formenschließvorrichtung hat bei einer IS-Maschine die Aufgabe, die Hälften einer geteilten Form so fest miteinander zu verschließen, daß durch den beim Verpressen oder Verblasen des Blastropfens bzw. -külbels auftretenden Druck im Inneren der Form diese sich nicht öffnen kann.

— ィ2 —

Gelöst wird diese Aufgabe dadurch, daß die Formehälftenpaare jeweils über Kniehebelgelenke mit dem Antrieb verbunden sind. Die Kniehebelgelenke ergeben einen sicheren
Verschluß der Formenhälften einer Form, so daß mit vergleichsweise hohen Drücken, d.h. mit großer Geschwindigkeit, gearbeitet werden kann.

Vorteilhaft ist als Antrieb für das Verschwenken der Formenhälftenpaare eine hydraulische   Axial-Kolben-Einheit vorgesehen. Durch die Inkompressibilität des hydraulischen Antriebsmittels wird eine weitere Steigerung der Genauigkeit
sowie der Schnelligkeit des Bewegungsablaufes erreicht.

Die   Axial-Kolben-Einheit ist durch ein Umschaltventil od.dgl.
betätigt, welches von einem Rechner und Prozessor gesteuert
ist, denen die für einen optimalen Arbeitsablauf erforderlichen Daten vorgegeben sind.

Die Erfindung erstreckt sich weiterhin auf eine Vorrichtung
zum Umsetzen eines oder mehrerer Vorformlinge (Külbel) aus
einer oder mehreren Vorformen in eine oder mehrere diesen zugeordnete Fertigformen und Wänden desselben bzw. derselben, um
180$^\circ$ auf dem Wege von der bzw. den Vorformen zu der bzw. den
Fertigformen einer Verarbeitungsmaschine zur Herstellung von
Hohlglasartikeln, wobei ein Arm vorgesehen ist, dessen eines Ende an einem Zahnrad befestigt ist, welches mit einer Zahnstange od.dgl. kämmt, die mit einem Antrieb in Verbindung
steht.

Es ist bekannt, den Antrieb eines derartigen Inverts einer
IS-Verarbeitungsmaschine mit Druckluft zu beaufschlagen. Bei
steigender Produktionsgeschwindigkeit wird die den Bewegungsabläufen der einzelnen Bauteile einer IS-Verarbeitungsmaschine zur
Verfügung stehende Zeit immer kürzer. Dementsprechend wachsen die
Antriebskräfte zur Beschleunigung oder Verzögerung der Bewegungen
des Invertmechanismus erheblich an. Besitzen die zu bewegenden Mechanismen eine hohe Masse, so verhindert darüber hinaus deren Trägheit das Überschreiten einer gewissen Bewegungsgeschwindigkeit. Die zum Antrieb dieser Mechanismen
verwendete Preßluft bewirkt infolge ihrer Kompressibilität
darüber hinaus eine weitere Verzögerung und Unschärfe aller
Bewegungen. Für den Invertmechanismus einer IS-Verarbeitungsmaschine bedeutet dies, daß die Schwenkbewegung verzögert abläuft, bis die Preßluft ihren vollen Druck im Antriebsaggregat aufgebaut hat. Ist der Schwenkvorgang beendet, so sinkt
der Preßluftdruck nicht schlagartig, sondern verzögert, was eine
gewisse Zeit erfordert.

Um diese Nachteile zu beseitigen findet erfindungsgemäß als
Antrieb für den Arm eine hydraulische Axial-Kolben-Einheit
Verwendung. Der Einfluß der Massenträgheit der Zahnrad-Zahnstangeneinrichtung für den Invert kann dadurch auch für
höhere Produktionsgeschwindigkeiten und damit notwendige
positive und negative Beschleunigungen ausgeglichen werden.

Bei einer weiteren Ausführungsform für noch höhere Bewegungs- und Produktionsgeschwindigkeiten bei weiterhin
verringerten Antriebsenergieaufwendungen wird der Schwenkarm erfindungsgemäß direkt mit einem hydraulischen Drehkolben verbunden; dessen rotatorischer Bewegungsablauf
kann das gewünschte Wenden des Külbels und seinen Transport
von der Vor- zur Fertigform auf direktem Wege bewirken.

In beiden Fällen ist der hydraulische Invert-Antrieb durch
ein Umschaltventil od.dgl. betätigt, welches von einem
Rechner und Prozessor gesteuert ist, denen die Kriterien
für einen optimalen Arbeitsablauf vorgegeben sind.

Gegenstand der Erfindung ist weiterhin eine Vorrichtung zum Heben und
Senken sowie Verschwenken eines oder mehrerer Blasköpfe zu
bzw. von der den Blasöffnungen einer oder mehrerer Fertigformen einer Verarbeitungsmaschine zur Herstellung von Hohlglasartikeln, wobei der bzw. die Blasköpfe an einem vorragenden Arm angebracht sind, der an einer Achse befestigt ist, die
mit einem Antrieb gekoppelt ist.

—15—

Die Ausformung eines Glasartikels aus einem flüssigen
Glastropfen bzw. Külbel geschieht bei einer IS-Verarbeitungsmaschine bekanntlich durch Verpressen und/oder Verblasen.
In der Fertigform einer IS-Maschine wird z.B. zum Ausbla-
Verarbeitungssen des Külbels ein Blaskopf auf die Fertigform aufgesetzt. Dieses Aufsetzen erfolgt in einem Bewegungsablauf,
der sich aus vertikal-translatorischer und horizontaler
Drehbewegung zusammensetzt. Der Antrieb erfolgt üblicherweise pneumatisch, wobei die Preßluft auf eine Reihe verschiedener Zylinder einwirkt, um diese zusammengesetzten
Bewegungen zu erzeugen. Die Verwendung eines pneumatischen
Antriebs beim Blaskopfmechanismus ist jedoch mit einer Reihe
schwerwiegender Nachteile verbunden.

Die zusammengesetzten Bewegungen des Blaskopfes können zwar
in bekannter Weise durch mechanische Kurvenführungen, die unter sich gekoppelt sind, und dadurch mit einem synchronen Verhalten ablaufen, dargestellt werden. Die Eigenart von Preßluft jedoch, nämlich erst nach Aufbau eines Druckes, der die
Reibung aller zu bewegenden Teile überwindet wirksam zu werden,
führt dazu, daß insbesondere bei derart zusammengesetzten Bewegungen von miteinander in Verbindung stehenden Maschinenteilen unterschiedlicher Massen ein unstetes Verhalten einsetzt. Besonders bekannt ist in diesem Zusammenhang die Neigung
solcher Maschinenteile in Schwingungen zu geraten. Aus einer an sich angestrebten, in einer Richtung gleichförmig verlaufenden Bewegung werden dadurch Oszillationen, denen man mittels aufwendiger Dämpfung zu begegnen versucht. Diese Dämpfung führt aber zwangsläufig zu einer Begrenzung der Verarbeitungs-Bewegungsgeschwindigkeit der Blasköpfe einer IS-Maschine, was wiederum eine Steigerung der Produktion über eine gewisse Grenze hinaus verhindert. Darüber hinaus werden alle Verbindungsglieder der Blasköpfe vom Antrieb her bis zu den Köpfen selbst erheblich mechanisch beansprucht, was zu einer Verkürzung ihrer Lebensdauer führt. Ferner führt die Preßluft die Blasköpfe in den zusammengesetzten Bewegungsabläufen zu heftigem Anschlagen in die Endstellungen der Bewegungen.

Zur Vermeidung dieser Nachteile wird erfindungsgemäß vorgeschlagen, als Antriebe für das Heben und Senken des bzw. der Blasköpfe eine hydraulische Axial-Kolben-Einheit und für das Verschwenken einen hydraulischen Drehkolben zu verwenden. Auf diese Weise wird der Bewegungsablauf eines Blaskopfes zerlegt in seine beiden Grundelemente, nämlich in den gradlinigen, also translatorischen, und in den kreisenden, also rotierenden Bewegungsanteil. Diese Bewegungsanteile weisen getrennte hydraulische Antriebe auf, die jedoch miteinander gekoppelt sein können, so daß sich eine kompakte Baueinheit ergibt.

- 17 -

Die hydraulischen Antriebe sind durch Umschaltventile
od.dgl. betätigt, welche von einem Rechner und Prozessor
gesteuert sind, die derart vorprogrammiert sind, daß ein
möglichst optimaler Bewegungsablauf erreicht wird. Diese
können auch während der Bewegungsabläufe, z.B. wegen gegenüber dem Programm veränderter äußerer Parameter, abgeändert werden, mit der Folge einer präzisen Stellung des
Blaskopfes und eines jederzeit kontrollierbaren Ablaufs
der Bewegungen.

Weiterhin erstreckt sich die Erfindung auf eine Vorrichtung
zum Umsetzen eines oder mehrerer Hohlglasartikels aus einer
oder mehreren Fertigformen einer Glasverarbeitungsmaschine
auf eine Transporteinrichtung od.dgl. einer Abstellfläche
usw., wobei ein Greifer vorhanden ist, dessen eines Ende
an einem Arm angebracht ist, der an einem Zahnrad befestigt
ist, welches mit einer Zahnstange od.dgl. kämmt, die mit
einem Antrieb in Verbindung steht.

Ein derartiger bekannter Greifer dient dazu, die in der IS-Verarbeitungs
Maschine hergestellten Glasartikel in noch heißem Zustand
zu erfassen, aus der Maschine herauszuführen und auf eine
vorbeilaufende Fördereinrichtung oder eine Abstellfläche
abzusetzen. Um dieser Aufgabe gerecht zu werden muß der Greifer eine vertikale Aufwärtsbewegung, eine horizontale
translatorische und danach wieder eine vertikale Abwärtsbewegung durchführen. Zur Rückkehr in die Ruhestellung vollführt der Greifer die drei vorerwähnten Bewegungen in umgekehrter Reihenfolge. Es ist bekannt, als Antriebsmittel für
den Bewegungsablauf eines Greifers Preßluft zu verwenden.
Der Nachteil der Preßluft als Antriebsmittel ist bekannt
und insbesondere eingangs bereits beschrieben. Die Massenträgheit aller bewegten Teile sowie die Kompressibilität
der Preßluft verhindern schnellere Bewegungsabläufe· und
damit höhere Produktionsgeschwindigkeiten.

Erfindungsgemäß werden diese Nachteile dadurch vermieden,
daß als Antrieb für den Greifer eine hydraulische  Axial-
Kolben-Einheit vorgesehen ist. Auf diese Weise wird eine hohe
Präzision der Bewegung einschließlich der Fixierung von Anfangs- und Endstellung erreicht. Ein Überschwingen in den
Endstellungen wird vermieden, so daß es einer besonderen
Dämpfung nicht bedarf.

Eine weitere Verbesserung des Bewegungsablaufes für noch höhere Bewegungsgeschwindigkeiten wird gemäß einem weiteren Merkmal durch Anwendung eines direkt arbeitenden hydraulischen Drehkolbens erreicht. Dieser kann z.B. über eine Exzenterscheibe
unmittelbar die Drehbewegung ausführen, um den Transport des Artikels aus der Fertigform auf die Transporteinrichtung
od.dgl. vorzunehmen.

Die hydraulischen Antriebe beider Ausführungsformen sind
durch Umschaltventile od.dgl. betätigt, die von einem Rechner und Prozessor gesteuert sind, denen die für einen optimalen Ablauf erforderlichen Parameter vorgegeben werden.

Gegenstand der Erfindung ist weiterhin eine Vorrichtung zum
Verschieben von in einer Verarbeitungsmaschine zur Herstellung
von Hohlglasartikeln hergestellten Artikeln von einer Abstellplatte od.dgl. auf eine Transporteinrichtung od.dgl., wobei diese eine oder mehrere Abstreifer aufweist, der bzw. die mit einem
Antrieb in Verbindung stehen. Ein Abstreifer hat die Aufgabe,
in einer Glasformmaschine den fertigen Artikel von einem Abstellplatz auf einen anderen Platz, z.B. auf ein Transportband, zu bewegen. Entscheidend für die richtige Wirkung des
Abstreifers ist die Art seiner Bewegung und der zurückgelegte
Weg sowie die Geschwindigkeit. In vielen Fällen erfolgt der
Weg längs einer Kurve und mit wechselnden Gescheindigkeiten,
die wiederum von der Art und Größe sowie Folgegeschwindigkeit
der produzierten Glasartikel abhängen. Es ist bekannt, den Bewegungsablauf eines oder mehrerer Abstreifer mit druckluftbeaufschlagten Antrieben vorzunehmen. Die Verwendung von Druckluft ist infolge ihrer Kompressibilität jedoch mit wesentlichen
Nachteilen behaftet, wie eingangs bereits dargelegt ist.

Um diese zu vermeiden, wird erfindungsgemäß vorgeschlagen, daß der bzw. die Abstreifer an einer hydraulischen Axial-Kolben-Einheit angebracht ist bzw. sind, welche mit einem hydraulischen Drehkolben gekoppelt ist. Durch die Verwendung hydraulischer Antriebe ergibt sich ein außerordentlich genauer und schneller Bewegungsablauf, so daß insgesamt die Produktionsgeschwindigkeit einer IS-Verarbeitungsmaschine erhöht werden kann. Außerdem führt die Kopplung der beiden hydraulischen Antriebe zu einer sehr kompakten Wirkungsweise.

Die hydraulischen Antriebe sind durch Umschaltventile od.dgl. betätigt, welche von einem Rechner und Prozessor gesteuert sind, denen die für einen optimalen Arbeitsablauf erforderlichen Parameter vorgegeben sind.

Ausführungsbeispiele der Erfindung sind an Hand der Zeichnungen näher erläutert, und zwar zeigt:

Figur 1   in schematischer Darstellung einen Verteiler mit Antrieb,
Figur 2   in schematischer Darstellung die Ansichten von Tropfringen und Vorformböden mit ihren Antrieben,
Figur 3   in schematischer Darstellung das Leitungssystem der
          Antriebe für Tropfringe und Vorformböden,
Figur 4   in schematischer Darstellung die Draufsicht eines
          Formenschließmechanismus,

Figur 5  in schematischer Darstellung die Ansicht des
          Invertmechanismus einer IS-Glasformmaschine,

Figur 6  in schematischer Darstellung die Ansicht einer
          weiteren Ausführung eines Invertmechanismus,

Figur 7  in schematischer Darstellung die Ansicht eines
          Blaskopfes mit Antrieben,

Figur 8  in schematischer Darstellung die Ansicht einer
          Umsetzvorrichtung mit Antrieb,

Figur 9  in schematischer Darstellung eine weitere Ausführungsform einer Umsetzeinrichtung mit Antrieb und

Figur 10 in schematischer Darstellung die Draufsicht einer
          Abstreifeinrichtung mit Antrieben.


In den einzelnen Figuren sind gleiche Bauteile mit gleichen
Bezugszeichen versehen.


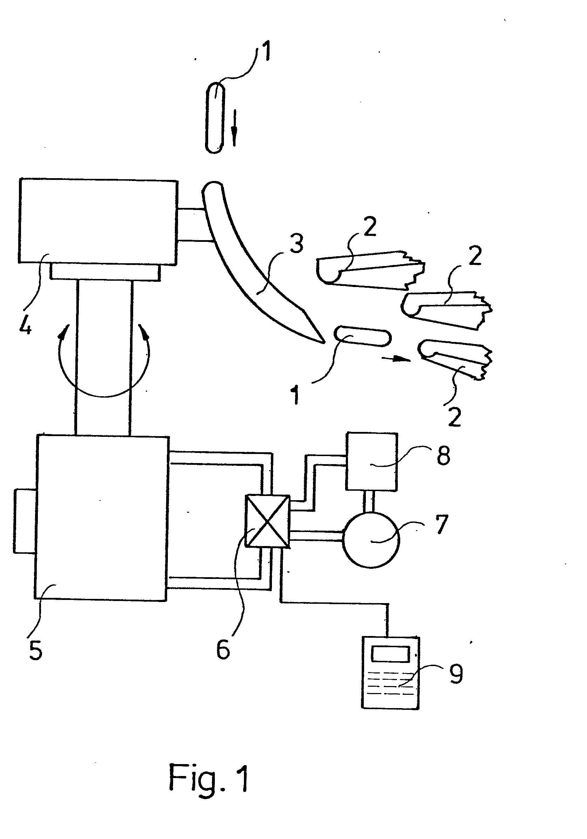

Aus Figur 1 geht die Ausbildung des Tropfenverteilers hervor.


In den mit 3 bezeichneten Verteiler fallen von oben her
die Glastropfen 1 hinein. Der Verteiler 3 führt eine bestimmte Winkelbewegung aus, so daß die ihn verlassenden
Tropfen 1 in die Rinnen 2 einer nicht weiter dargestellten IS-Verarbeitungsmaschine übergeben werden.


Als Antrieb für den Verteiler 3 ist ein hydraulischer Drehkolben 5 vorgesehen, welcher über das Umschaltventil
6 betätigt ist, das vom Rechner und Prozessor 9 gesteuert
ist. Der Drehkolben 5 wirkt auf Übertragungselemente 4 ein,
mit denen der Verteiler 3 verbunden ist.

Zum Hydraulikantrieb gehört ferner eine Pumpe 7 und ein Sammelbehälter 8, die in herkömmlicher Weise ausgebildet sind.

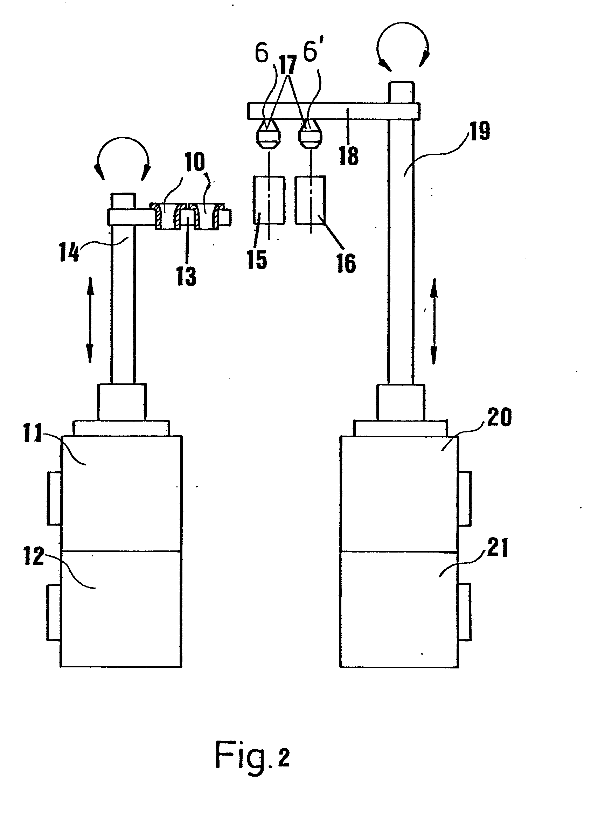

Aus Figur 2 ist das Prinzip der Hydraulikantriebe für die
Tropfringe und die Vorformböden einer IS-Verarbeitungsmaschine dargestellt. Die Vorformen 15, 16, hier beispielsweise als Doppelform für zwei Tropfen dargestellt, erhalten
die Tropfringe 10 aufgesetzt, die sich an einem vorragenden
Arm 13 befinden. Der Arm 13 ragt frei von einer Achse 14
vor, die mit einem Antrieb gekoppelt ist, welcher als hydraulische Axial-Kolben-Einheit 11 ausgeführt ist. Diese
Axial-Kolben-Einheit 11 für die translatorische vertikale
Bewegung der Tropfringe 10 ist gekoppelt mit einem weiteren
Antrieb in Form eines hydraulischen Drehkolbens 12 für
die rotative Bewegung.

Die Tropfringe 10 sind in Figur 2 in ihrer Ruhestellung
gezeigt.

Sobald die Tropfringe 10 von den Vorformen 15, 16 angehoben und durch seitliches Verschwenken diese freigegeben haben, werden die im rechten Teil der Figur 2 dargestellten Formböden 17 über die Vorformen 15, 16 geschwenkt und auf diese abgesenkt. Die Formböden 17 befinden sich ebenfalls an einem frei vorragenden Arm 16, welcher an der Achse 19 befestigt ist. Die Achse 19 steht mit einem hydraulischen Antrieb in Form einer Axial-Kolben-Einheit 20 in Verbindung, die mit einem weiteren hydraulischen Antrieb in Form eines Drehkolbens 21 gekoppelt ist. Durch diese hydraulischen Antriebe 20, 21 sind jeweils translatorische vertikale sowie horizontale rotative Bewegungen der Arme 13, 18 und damit der Tropfringe 10 sowie der Formböden 17 möglich.

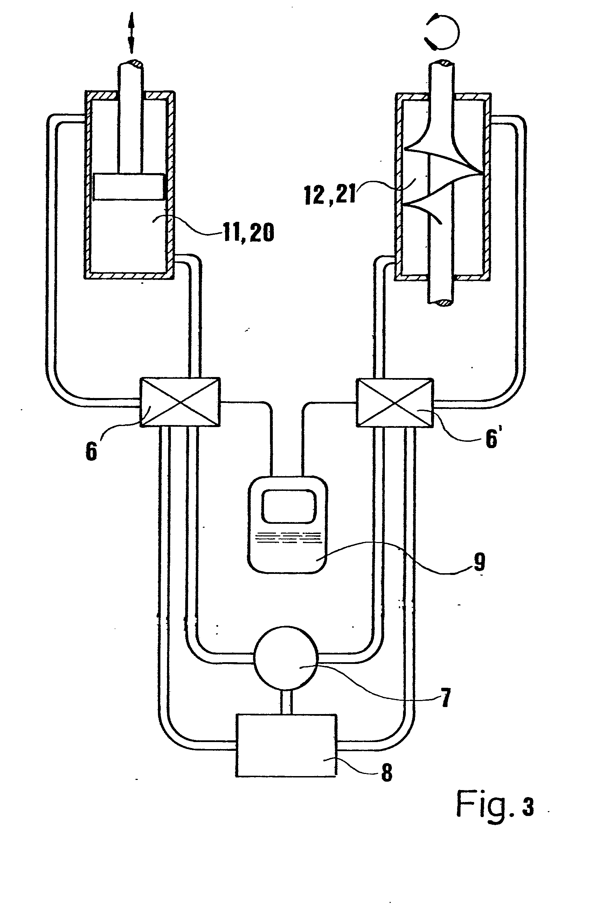

Wie aus Figur 3 hervorgeht, erfolgt die Betätigung der Axial-Kolben-Einheiten 11, 20 und der Drehkolben 12, 21 über die Umschaltventile 6, 6', die von einem Rechner und Prozessor 9 gesteuert sind.

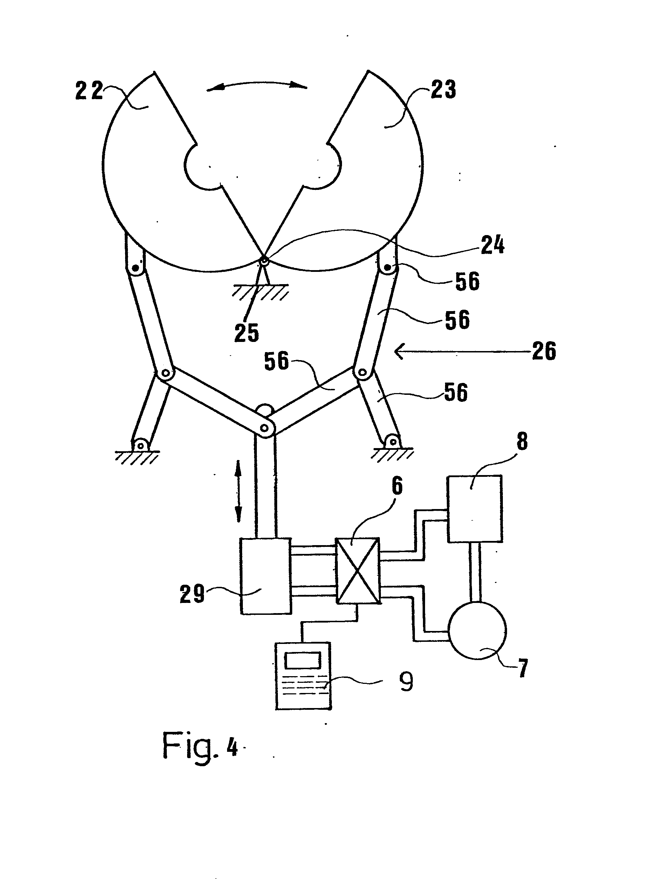

Bei dem Formenschließmechanismus nach Figur 4 sind mit 22, 23 die Hälften einer Form bezeichnet, die mit ihrem Gelenk 24 an der Maschine festgelegt ist, wie mit 25 angedeutet ist. Die Formenhälften 22, 23 sind über das Kniehebelgelenk 26 mit einem Antrieb verbunden. Das Kniehebelgelenk 26 besteht aus den Gelenkstangen 27, die bei 28 festgelegt sind.

Als Antrieb für das Verschwenken der Formenhälften 22, 23 findet eine hydraulische Axial-Kolben-Einheit 29 Verwendung, welche von dem Umschaltventil 6 betätigt ist, die vom Rechner und Prozessor 9 gesteuert ist.

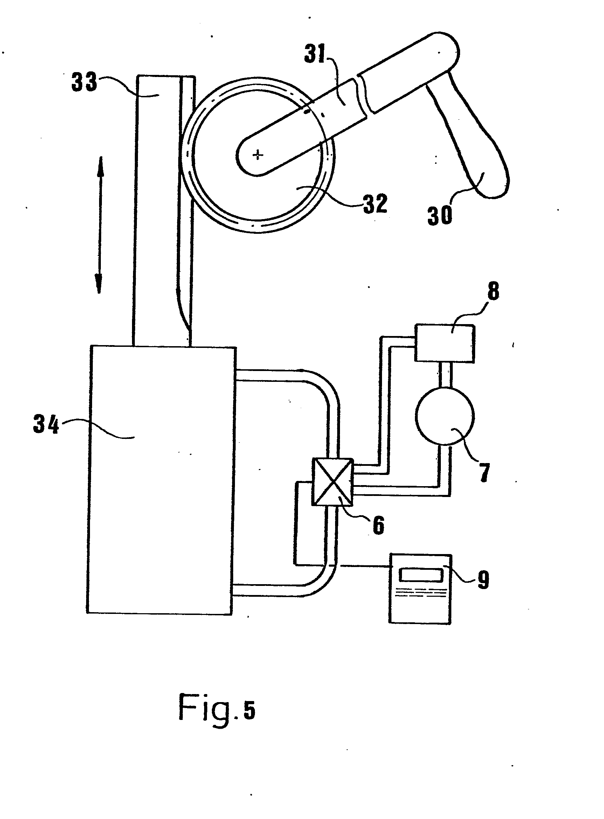

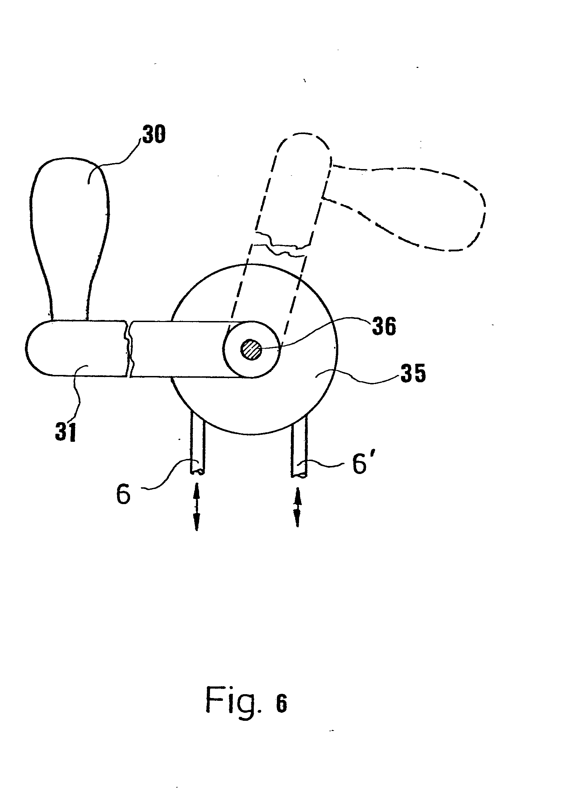

In Figur 5 und 6 ist ein Invertmechanismus zum Umsetzen eines oder mehrerer Vorformlinge aus einer oder mehreren Vorformen in eine oder mehrere diesen zugeordnete Fertigformen und zum Wenden desselben bzw. derselben um 180° auf dem Weg zwischen Vorform und Fertigform dargestellt.

Mit 30 ist der Vorformling bzw. das Külbel bezeichnet, welcher sich an dem einen Ende eines Armes 31 befindet, dessen anderes Ende mit einem Zahnrad 32 in Verbindung steht, welches mit einer Zahnstange 33 kämmt, die mit einem Antrieb in Verbindung steht, der als hydraulische Axial-Kolben-Einheit 34 ausgeführt ist. Die Betätigung des Antriebes erfolgt über das Umschaltventil 6, welches von Rechner und Prozessor 9 gesteuert ist.

Der Invert transportiert den Vorformling 30 von der nicht gezeigten Vorform zur ebenfalls nicht gezeigten Fertigform und wendet dabei den Vorformling um 180°.

Bei der Ausführung nach Figur 6 findet als Antrieb ein hydraulischer Drehkolben 35 Verwendung, welcher unmittelbar mit dem dem Vorformling 30 abgewandten Ende des Armes 31 verbunden ist. Der Arm 31 sitzt hierbei mit seinem einen Ende auf der Achse 36 des Drehkolbens 35.

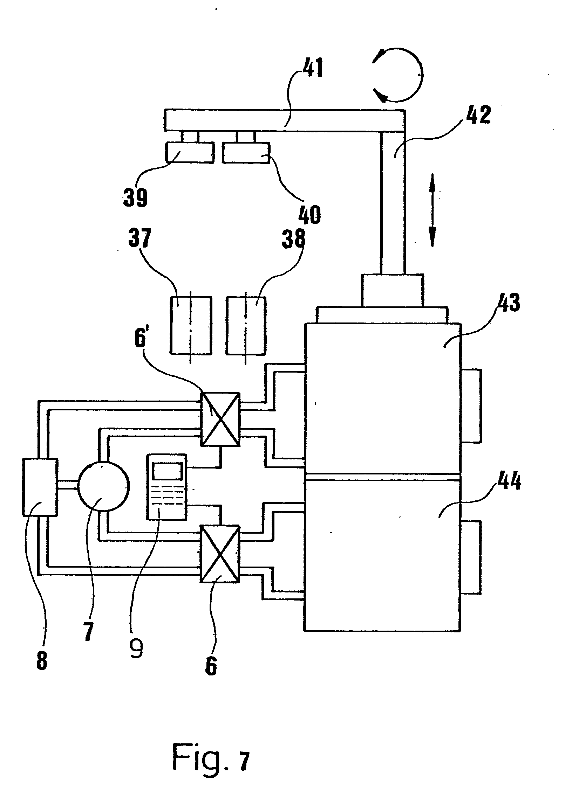

In Figur 7 ist die Vorrichtung zum Bewegen des Blaskopfes für die Fertigform gezeigt, und zwar in einer Ausführung als Doppeltropfeneinrichtung einer IS-Verarbeitungsmaschine.

Mit 37 und 38 sind die beiden Fertigformen bezeichnet, denen die Blasköpfe 39, 40 zum Ausblasen der in den Fertigformen 37, 38 befindlichen Vorformlinge zugeordnet sind. Die Blasköpfe 39, 40 sind an einem vorragenden Arm 41 angebracht, der an einer Achse 42 befestigt ist. Die Achse 42 steht mit der als hydraulischem Antrieb dienenden Axial-Kolben-Einheit 43 in Verbindung, die wiederum auf den als hydraulischen Antrieb dienenden Drehkolben 44 aufgesetzt und mit diesem gekoppelt ist. Die Betätigung der Axial-Kolben-Einheit 43 sowie des Drehkolbens 44 erfolgt über die Umschaltventile 6, 6', die von einem Rechner und Prozessor 9 gesteuert sind.

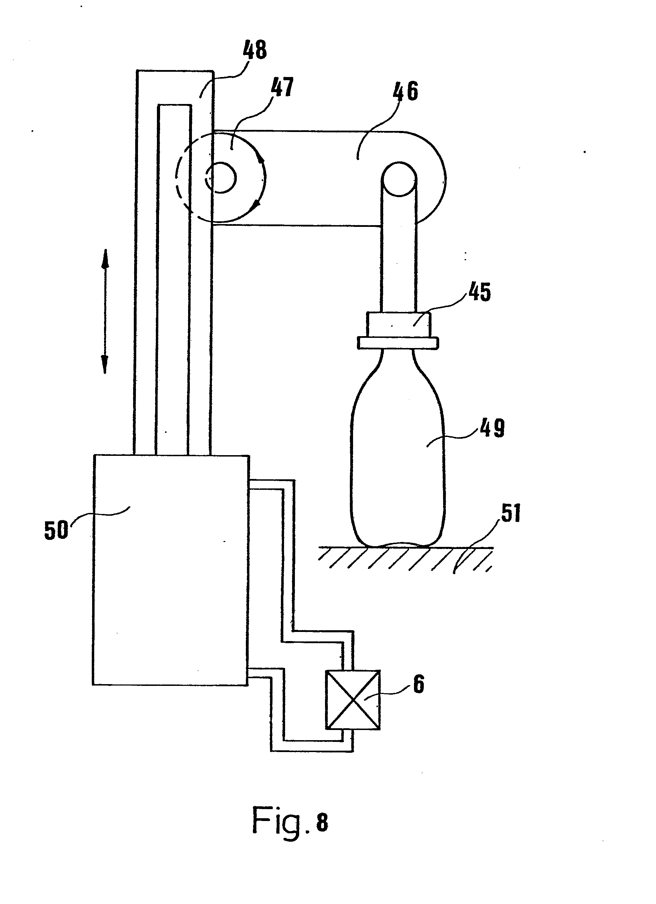

Figur 8 zeigt einen Greifer, welcher dazu dient, die in
der Verarbeitungsmaschine hergestellten Glasartikel in
noch heißem Zustand zu ergreifen, aus der Maschine herauszuführen und auf ein vorbeilaufendes Transportband oder eine
Abstellfläche abzusetzen.

Der Greifer ist mit 45 bezeichnet, dessen eines Ende an einem
Arm 46 angebracht ist, dessen anderes Ende an einem Zahnrad
47 befestigt ist, welches mit der Zahnstange 48 kämmt. In
dem Greifer 45 befindet sich die Mündung eines Glasartikels
49. Translatorisch angetrieben ist die Zahnstange 48 durch
eine hydraulische Axial-Kolben-Einheit 50, welche über das
Umschaltventil 6 betätigt und über einen nicht weiter dargestellten Rechner und Prozessor gesteuert ist, analog den vorher behandelten Ausführungsformen. Für den Umsetzvorgang entnimmt der Greifer 45 einen Artikel 49 aus einer nicht gezeichneten Fertigform, hebt diesen an und schwenkt ihn auf einem
Kreisbogen zu einer Fördereinrichtung 51, beispielsweise in
Form eines Transportbandes.

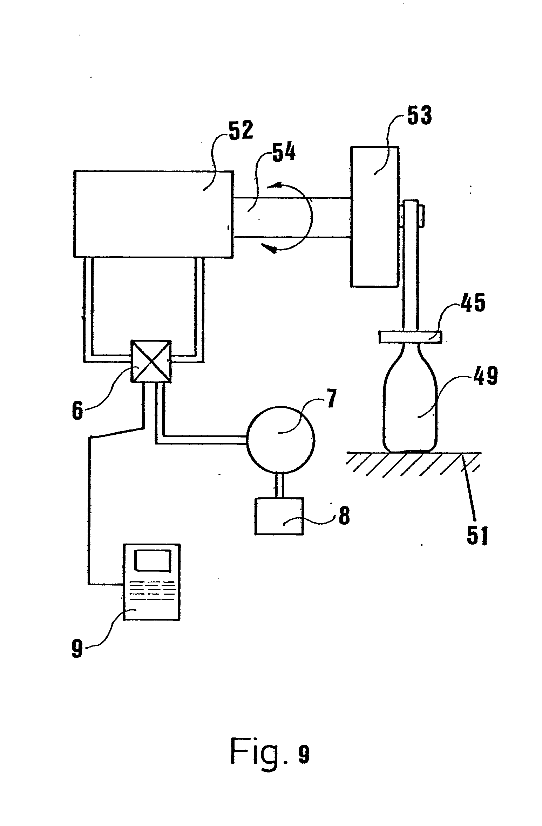

Aus Figur 9 geht der direkte Antrieb eines Greifers 45
durch einen hydraulisch arbeitenden Drehkolben 52 hervor.

Der Greifer 45 ist an einer Exzenterscheibe 53 angebracht, welche diesen jeweils um 180° bewegt. Die Exzenterscheibe 53 ist auf die Achse 54 des Drehkolbens 52 aufgesetzt.

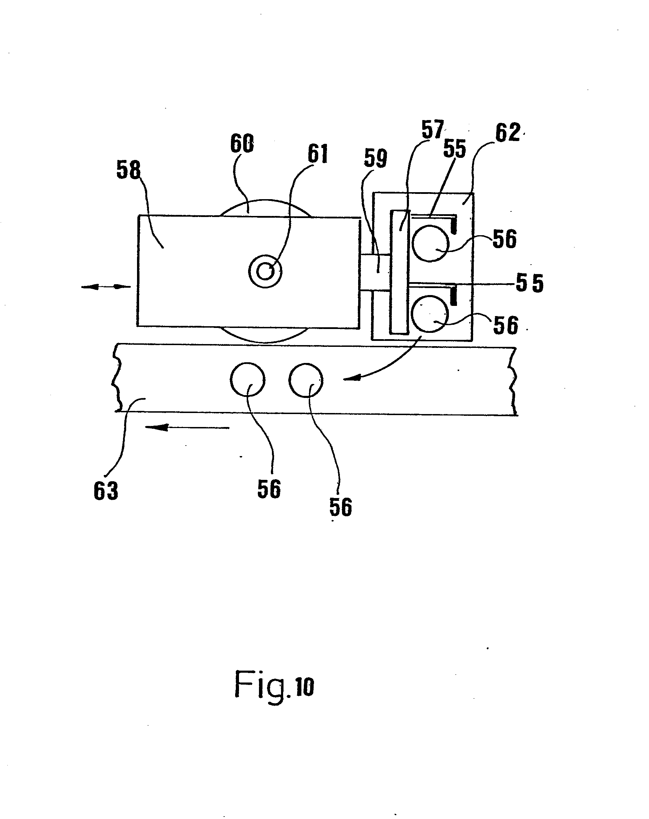

In Figur 10 ist ein sog. Abstreifer gezeigt, welcher den fertigen Artikel von einem Abstellplatz der IS-Verarbeitungsmaschine auf einen anderen Platz bewegt. Im dargestellten Ausführungsbeispiel sind zwei Abstreifer 55 vorgesehen, die die fertigen Artikel 56 hintergreifen. Die Abstreifer 55 befinden sich an einer Platte 57, die mit einer als Antrieb dienenden hydraulischen Axial-Kolben-Einheit 58 über die Stange 59 in Verbindung steht. Unterhalb der Axial-Kolben- Einheit 58 befindet sich der hydraulische Drehkolben 60, welcher über die Achse 61 mit der Axial-Kolben-Einheit 58 gekoppelt ist.

Die Wirkungsweise ist derart, daß die auf der Abstellplatte 62 aufstehenden Glasartikel 56 durch eine Schwenkbewegung der Abstreifer 55 durch Betätigung des Drehkolbens 60 auf die Fördereinrichtung 63 aufgeschoben und von dieser abtransportiert werden. Nunmehr werden durch Betätigen beider Antriebe 58, 60 die Abstreifer 55 zurückgezogen und zurückgeschwenkt, woraufhin diese vorgeschoben und hinter die nächsten aufstehenden Artikel geschwenkt werden können, welche hinwiederum auf die Fördereinrichtung 63 verschwenkt werden.

# Dipl.-Ing. A. Spalthoff
## Patentanwalt

D-43 Essen 1, den 18. 1. 1982
Pelmanstraße 31
Postschließfach 34 02 20
Telefon.(0201) 772008

0062169

Akten-Nr. 24/176 S/0
In der Antwort bitte angeben

VEBA-GLAS AG
4300 Essen 12


# PATENTANSPRÜCHE :

1. IS-Verarbeitungsmaschine zur Herstellung von Hohlglasartikeln, welche mit Vorformen und diesen zugeordneten Fertigformen ausgerüstet ist, dadurch gekennzeichnet, daß die
bewegten Teile der Vorrichtung mit hydraulischen Antrieben
versehen sind.

2. IS-Verarbeitungsmaschine nach Anspruch 1, dadurch gekennzeichnet, daß als hydraulische Antriebe Axial-Kolben-Einheiten
od.dgl. und/oder Drehkolben od.dgl. Verwendung finden.

3. IS-Verarbeitungsmaschine nach Anspruch 1 und/oder 2,
dadurch gekennzeichnet, daß der Druck des hydraulischen Mittels
im Bereich von 0,02 bis 200 bar liegt.

4. IS-Verarbeitungsmaschine nach Anspruch 1 und/oder einem oder mehreren der vorhergehenden, dadurch gekennzeichnet, daß in die hydraulischen Kreise ein oder mehrere Temperaturkompensatoren eingeschaltet ist bzw. sind.

5. IS-Verarbeitungsmaschine nach Anspruch 1 und/oder einem oder mehreren der vorhergehenden, dadurch gekennzeichnet, daß das hydraulische Mittel schwer entflammbar oder unbrennbar ist.

6. IS-Verarbeitungsmaschine nach Anspruch 1 und/oder einem oder mehreren der vorhergehenden, dadurch gekennzeichnet, daß die hydraulischen Kreise in Teilkreise unterteilt sind.

7. IS-Verarbeitungsmaschine nach Anspruch 1 und/oder einem oder mehreren der vorhergehenden, dadurch gekennzeichnet, daß die Steuerung der hydraulischen Antriebe durch mechanisch und/oder hydraulisch und/oder elektrisch betätigte Ventile erfolgt.

8. IS-Verarbeitungsmaschine nach Anspruch 1 und/oder einem oder mehreren der vorhergehenden, dadurch gekennzeichnet, daß die hydraulischen Antriebe von einem Rechner und Prozessor gesteuert sind.

9. Vorrichtung zur Verteilung der von einem flüssigen Glasstrang abgeschnittenen Abschnitte (Tropfen) in die Rinnen einer Verarbeitungsmaschine zur Herstellung von Hohlglasartikeln, insbesondere zur Verwendung in einer IS-Verarbeitungsmaschine nach Anspruch 1 und/oder einem oder mehreren
der vorhergehenden, dadurch gekennzeichnet, daß als Antriebe für den Verteiler (3) ein hydraulischer Drehkolben (5)
vorgesehen ist.

10. Vorrichtung nach Anspruch 9, dadurch gekennzeichnet, daß
                    antrieb
der Drehkolben (5) durch ein Umschaltventil (6) od.dgl. betätigt ist, welches von einem Rechner und Prozessor (9) gesteuert ist.

11. Vorrichtung zum Heben und Senken sowie Verschwenken eines
oder mehrerer Tropfringe zu bzw. von der bzw. den Eintrittsöffnungen einer oder mehrerer Vorformen einer Verarbeitungsmaschine zur Herstellung von Hohlglasartikeln, wobei der bzw.
die Tropfringe an einem vorragenden Arm angebracht sind, der
an einer Achse befestigt ist, die mit einem Antrieb gekuppelt
ist, insbesondere zur Verwendung in einer IS-Verarbeitungsmaschine nach Anspruch 1 und/oder einem oder mehreren der vorhergehenden, dadurch gekennzeichnet. daß als Antriebe für das Heben und Senken des bzw. der Tropfringe (10) eine hydraulische
Axial-Kolben-Einheit (11) und für deren Verschwenken ein hydraulischer Drehkolben (12) vorgesehen sind.

0062169

12. Vorrichtung nach Anspruch 11, dadurch gekennzeichnet, daß die Axial-Kolben-Einheit (11) und der Drehkolben (12) miteinander gekoppelt sind.

13. Vorrichtung nach Anspruch 11 und 12, dadurch gekennzeichnet, daß die hydraulischen Antriebe (11, 12) durch Umschaltventile (6, 6') od.dgl. betätigt sind, welche von einem Rechner und Prozessor (9) gesteuert sind.

14. Vorrichtung zum Heben und Senken sowie zum Verschwenken einer oder mehrerer Böden zu bzw. von der bzw. den Bodenöffnungen einer oder mehrerer Vorformen einer Verarbeitungsmaschine zur Herstellung von Hohlglasartikeln, wobei der bzw. die Böden an einem vorragenden Arm angebracht sind, der an einer Achse befestigt ist, die mit einem Antrieb gekoppelt ist, insbesondere zur Verwendung in einer IS-Verarbeitungsmaschine nach Anspruch 1 und/oder einem oder mehreren der vorhergehenden, dadurch gekennzeichnet, daß als Antriebe für das Heben und Senken des bzw. der Böden (17) eine hydraulische Axial-Kolben-Einheit (20) und für deren Verschwenken ein hydraulischer Drehkolben (21) vorgesehen sind.

15. Vorrichtung nach Anspruch 14, dadurch gekennzeichnet, daß die Axial-Kolben-Einheit (20) und der Drehkolbenantrieb (21) miteinander gekoppelt sind.

0062169

16. Vorrichtung nach Anspruch 14 und/oder 15, <u>dadurch</u> <u>gekennzeichnet</u>, daß die hydraulischen Antriebe (20,21) durch Umschaltventile (6, 6') od.dgl. betätigt sind, welche von einem Rechner und Prozessor (9) gesteuert sind.

17. Vorrichtung zum Schließen und Öffnen der Formen einer Verarbeitungsmaschine zur Herstellung von Hohlglasartikeln, wobei die Formenhälftenpaare mit ihren Gelenken an der Verarbeitungsmaschine festgelegt sind, insbesondere zur Verwendung in einer IS-Verarbeitungsmaschine nach Anspruch 1 und/oder einem oder mehreren der vorhergehenden, <u>dadurch</u> <u>gekennzeichnet</u>, daß die Formenhälften (22, 23) einer Form jeweils über ein Kniehebelgelenk (26) mit dem Antrieb verbunden ist.

18. Vorrichtung nach Anspruch 17, <u>dadurch gekennzeichnet</u>, daß als Antrieb für das Verschwenken der Formenhälften (22, 23) eine hydraulische Axial-Kolben-Einheit (29) vorgesehen ist.

19. Vorrichtung nach Anspruch 17 und/oder 18, <u>dadurch gekenn-</u> <u>zeichnet</u>, daß die Axial-Kolben-Einheit (29) durch ein Umschaltventil (6) od.dgl. betätigt ist, welches von einem Rechner und Prozessor (9) gesteuert ist.

20. Vorrichtung zum Umsetzen eines oder mehrerer Vorformlinge (Külbel) aus einer oder mehreren Vorformen in eine oder mehrere diesen zugeordnete Fertigformen und Wenden desselben bzw. derselben um 180° auf dem Wege von der bzw. den Vorformen zu der bzw. den Fertigformen einer Verarbeitungsmaschine zur Herstellung von Hohlglasartikeln, wobei ein Arm vorgesehen ist, dessen eines Ende an einem Zahnrad befestigt ist, welches mit einer Zahnstange od.dgl. kämmt, die mit einem Antrieb in Verbindung steht, insbesondere zur Verwendung in einer IS-Verarbeitungsmaschine nach Anspruch 1 und/oder einem oder mehreren der vorhergehenden, dadurch gekennzeichnet, daß als Antrieb für die Zahnstange (33) od.dgl. eine hydraulische Axial-Kolben-Einheit (34) Verwendung findet.

21. Vorrichtung zum Umsetzen eines oder mehrerer Vorformlinge (Külbel) aus einer oder mehreren Vorformen in eine oder mehrere diesen zugeordnete Fertigformen und Wenden desselben bzw. derselben um 180° auf dem Wege von der bzw. den Vorformen zu der bzw. den Fertigformen einer Verarbeitungsmaschine zur Herstellung von Hohlglasartikeln, wobei ein Arm vorgesehen ist, dessen eines Ende mit einem Antrieb in Verbindung steht, insbesondere zur Verwendung in einer IS-Verarbeitungsmaschine nach Anspruch 1 und/oder einem oder mehreren der vorhergehenden, dadurch gekennzeichnet, daß als Antrieb für den Arm (31) ein hydraulischer Drehkolben (35) Verwendung findet.

22. Vorrichtung nach Anspruch 20 oder 21, <u>dadurch gekenn-zeichnet</u>, daß die hydraulischen Antriebe (34,35) durch ein Umschaltventil (6) od.dgl. betätigt sind, welches von einem Rechner und Prozessor (9) gesteuert ist.

23. Vorrichtung zum Heben und Senken sowie Verschwenken eines oder mehrerer Blasköpfe zu bzw. von der bzw. den Blasöffnungen einer oder mehrerer Fertigformen einer Verarbeitungsmaschine zur Herstellung von Hohlglasartikeln, wobei der bzw. die Blasköpfe an einem vorragenden Arm angebracht sind, der an einer Achse befestigt ist, die mit einem Antrieb gekoppelt ist, insbesondere zur Verwendung in einer IS-Verarbeitungsmaschine nach Anspruch 1 und/oder einem oder mehreren der vorhergehenden, <u>dadurch gekennzeichnet</u>, daß als Antrieb für das Heben und Senken des bzw. der Blasköpfe (39, 40) eine hydraulische Axial-Kolben-Einheit (43) und für deren Verschwenken ein hydraulischer Drehkolben (44) vorgesehen ist.

24. Vorrichtung nach Anspruch 23, <u>dadurch gekennzeichnet</u>, daß die Axial-Kolben-Einheit (43) und der Drehkolben (44) miteinander gekoppelt sind.

25. Vorrichtung nach Anspruch 23 und/oder 24, <u>dadurch gekenn-zeichnet</u>, daß die hydraulischen Antriebe (43,44) durch Umschaltventile (6 6') od.dgl. betätigt sind, welche von einem Rechner und Prozessor (9) gesteuert sind.

26. Vorrichtung zum Umsetzen eines oder mehrerer Hohlglasartikel aus einer oder mehreren Fertigformen einer Glasverarbeitungsmaschine auf eine Transporteinrichtung od.dgl.,
wobei ein Greifer vorhanden ist, dessen eines Ende an einem
Arm angebracht ist, der an einem Zahnrad befestigt ist, welches mit einer Zahnstange od.dgl. kämmt, die mit einem Antrieb in Verbindung steht, insbesondere zur Verwendung in
einer IS-Verarbeitungsmaschine nach Anspruch 1 und/oder einem
oder mehreren der vorhergehenden, dadurch gekennzeichnet, daß
als Antrieb für die Zahnstange (48) eine hydraulische Axial-
Kolben-Einheit (50) vorgesehen ist.

27. Vorrichtung zum Umsetzen eines oder mehrerer Hohlglasartikel aus einer oder mehreren Fertigformen einer Glasverarbeitungsmaschine auf eine Transporteinrichtung od.dgl.,
wobei ein Greifer vorhanden ist, dessen eines Ende mit einem
Antrieb in Verbindung steht, insbesondere zur Verwendung in
einer IS-Verarbeitungsmaschine nach Anspruch 1 und/oder einem
oder mehreren der vorhergehenden, dadurch gekennzeichnet, daß als
Antrieb für den Greifer (45) ein hydraulischer Drehkolben (52)
vorgesehen ist.

28. Vorrichtung nach Anspruch 26 oder 27, dadurch gekennzeichnet, daß die hydraulischen Antriebe (50, 52) durch ein Umschaltventil (6) od.dgl. betätigt sind, welches von einem Rechner und
Prozessor (9) gesteuert ist.

29. Vorrichtung zum Verschieben von in einer Verarbeitungsmaschine zur Herstellung von Hohlglasartikeln hergestellten
Artikeln von einer Abstellplatte od.dgl. auf eine Transporteinrichtung od.dgl., wobei diese eine oder mehrere Abstreifer
aufweist, der bzw. die mit einem Antrieb in Verbindung stehen,
insbesondere zur Verwendung in einer IS-Verarbeitungsmaschine
nach Anspruch 1 und/oder einem oder mehreren der vorhergehenden, dadurch gekennzeichnet, daß der bzw. die Abstreifer (55)
an einer hydraulischen Axial-Kolben-Einheit (58) angebracht
ist bzw. sind, welche mit einem hydraulischen Drehkolbenantrieb (60)
gekoppelt ist.

30. Vorrichtung nach Anspruch 29, dadurch gekennzeichnet, daß
die hydraulischen Antriebe (58, 60) durch Umschaltventile od.dgl.
betätigt sind, welche von einem Rechner und Prozessor gesteuert
sind.

Fig. 1

Fig.2

3/10

Fig. 3

4(10

Fig. 4

Fig.5

Fig. 6

0052169

7/10

**Fig. 7**

8(10

Fig.8

Fig. 9

10/10

Fig.10